# EUROPÄISCHE PATENTANMELDUNG

(11) **EP 1 236 658 A1**
(43) Veröffentlichungstag der Anmeldung: **04.09.2002**
(21) Anmeldenummer: 02002948.4
(22) Anmeldetag: 11.02.2002
(51) Int. Cl.: B65G 1/137

(54) **Elektronisch unterstüztes lagerungsvorrichtung und verfahren zum auffinden von gelagerten gegenständen**

(30) Priorität: 20.02.2001 DE 10108217
(71) Anmelder: Stüber, Jürgen, Dr., 67071 Ludwigshafen (DE)
(72) Erfinder: Stüber, Jürgen, Dr., 67071 Ludwigshafen (DE)
(74) Vertreter: Köster, Reinhold, Dr.

(57) **Zusammenfassung**

Elektronisch unterstütztes Lagerungssystem umfassend mindestens einen Zentralrechner, eine Sendestation (v) und gegebenenfalls einen oder mehrere Lagerortssensoren (iii) mit definierter Position zur Erfassung von im Lager befindlichen Gegenständen, wobei die Gegenstände Kennungen oder die Kennungen speichernde Vorrichtungen aufweisen, und jeder Gegenstand zusätzlich
a) mit einem Empfänger (i), der die von der Sendestation (v) ausgesendeten Signale empfängt, und
b) einem akustischen und/oder optischen Signalgeber (ii), ausgestattet ist,
wobei der bzw. die Lagerortssensoren (iii) mit dem Zentralrechner in Verbindung stehen und derart positioniert sind, daß mindestens einer der Lagerortssensoren (iii) sich in der Nähe oder innerhalb der Reichweite des von dem gesuchten Gegenstand ausgesendeten Signals befindet. Darüber hinaus betrifft die Erfindung ein Verfahren zum Auffinden von in einem entsprechenden Lager befindlichen Gegenständen.

## Beschreibung

Die Erfindung betrifft ein elektronisch unterstütztes Lagerungssystem und ein Verfahren zum Auffinden von gelagerten Gegenständen, wobei die Gegenstände insbesondere mit einem akustischen und/oder optischen Signal ausgestattet sind.

Die Notwendigkeit der Wiederauffindung von Gegenständen in Gewerbe und Industrie ergibt sich insbesondere daraus, dass Ausgangsmaterialien, Vor- und Zwischenprodukte, Komponenten, Werkzeuge, Maschinen, u.ä. zum richtigen Zeitpunkt in der Wertschöpfungskette bereitgestellt werden müssen. Hierzu müssen entsprechende Gegenstände vorgehalten werden.

In der Praxis werden hierzu unterschiedliche Ordnungs- und Lagerhaltungssysteme eingesetzt. Die Anforderungen und Gestaltung dieser Systeme richtet sich nach der Natur der bereitzustellenden Gegenstände bzw. Komponenten und der Art des Wertschöpfungsprozesses. Wichtige Parameter hierbei sind Größe, Gewicht, Menge, Materialbeschaffenheit, Haltbarkeit, Wert, u.ä. der Komponenten, sowie die lokalen räumlichen und baulichen Gegebenheiten.

Aus Gründen der Wirtschaftlichkeit ist es erstrebenswert, die Bevorratung der Komponenten in ihrem Umfang so gering, und in ihrer logistischen Steuerung so einfach wie möglich zu halten. Die Notwendigkeit, die Komponenten mit vertretbarem Aufwand zur Weiterverarbeitung bzw. -nutzung überhaupt wiederzufinden, schränkt die Freiheitsgrade zur Gestaltung eines Lagerhaltungssystems jedoch stark ein.

Der Großteil der in der Praxis vorzuhaltenden Komponenten wird daher aus logistischen Gründen in Lagern aufbewahrt, die ausschließlich oder hauptsächlich diesem Zweck dienen. Man unterscheidet dabei im wesentlichen zwischen der klassischen und der chaotischen Lagerhaltung. Bei der klassischen Lagerhaltung werden die Komponenten in einem Lagerbereich gelagert, wobei den verschiedenen Gegenständen bzw. Komponenten jeweils eigene, spezifische Lagerplätze zugeordnet sind. Komponenten einer Art dürfen bei dieser Lagerhaltung nur an den, für sie bestimmten Lagerplätzen bzw. Parzellen (z.B. US 3,908,800) vorgehalten werden. Weiterhin ist in der Regel ein Lagerplatz nur einer Komponente zugeordnet. Die Lagerverwaltung erfolgt über die physische Belegung der Lagerplätze oder definierter Kompartimente, über Listen- oder Karteikartensysteme bzw. mit Hilfe von Computerprogrammen. Lagerbewegungen (Zu- und Abgänge von Komponenten) werden in den Listen (Karteien, Dateien) dokumentiert. Hierdurch ist der jeweilige Lagerbestand meßbar bzw. nachvollziehbar. Das Wiederauffinden der Komponenten ist durch die Kenntnis und Einhaltung der spezifischen Lagerbereiche gesichert. Nachteilig bei diesem Prinzip der Lagerhaltung ist jedoch die geringe Nutzungseffizienz und relative Starrheit des Systems, da freie Flächen eines Gegenstandes bei geringem Lagerbestand nicht durch Einlagerung eines anderen Gegenstandes genutzt werden können, ohne die leichte Wiederauffindbarkeit zu gefährden.

Bei der chaotischen Lagerhaltung werden die Gegenstände bzw. Komponenten in ihren groben äußeren Abmessungen standardisiert, z.B. in Form von Paletten. Die zur Verfügung stehende Lagerfläche wird in einzelne Plätze für die Gegenstände bzw. Komponenten aufgeteilt. Diesen Plätzen werden eindeutige Adressen zugeordnet. Den einzulagernden Gegenständen wird bei ihrer Anlieferung für jede Einheit bzw. Palette ein eindeutiger, freier Lagerplatz zugeordnet. Der Gegenstand wird anschließend auf genau diesen einen, zugeordneten Lagerplatz abgestellt. Die Lagerverwaltung erfolgt bei der chaotischen Lagerhaltung praktisch ausschließlich mit Hilfe von Computersystemen. Der einzulagernde Gegenstand wird hierbei angemeldet (gebucht), erhält einen Lagerplatz zugewiesen und wird dort abgestellt. Die Palette verbleibt an diesem Lagerplatz, bis sie aus- oder umgebucht wird. Der Lagerbestand und die Lagerbewegungen sind mit Hilfe des Computersystems meß- bzw. nachvollziehbar. Das Wiederauffinden der Gegenstände erfolgt über die Abfrage im Computersystem, an welcher Lagerplatzadresse der gesuchte Gegenstand gebucht und abgestellt wurde. Abgesehen von der Tatsache, daß die zu lagernden Gegenstände bzw. Komponenten hinsichtlich ihrer Abmessungen standardisiert werden müssen, ist bei der chaotischen Lagerhaltung von Nachteil, daß eine Umlagerung der Gegenstände nur mit entsprechendem Aufwand, wie z.B. Umbuchungen, möglich ist. Ferner ist das Verhältnis Nutz- zu Verkehrsfläche eingeschränkt, da die Lagerplätze so eingerichtet werden müssen, daß jeder Platz direkt zugänglich ist.

Darüber hinaus sind elektronisch unterstützte Lagerhaltungssysteme bekannt, wobei die gelagerten Gegenstände über entsprechende Sende- und Empfangsstationen, die mit einem Zentralrechner in Verbindung stehen, erfaßt bzw. lokalisiert werden können (z.B. DE 198 33 240). Nachteilig bei Lagersystemen dieser Art ist jedoch, dass das Auffinden der georteten Gegenstände zeitlich und logistisch aufwendig ist. Gemäß DE 198 33 240 kann beispielsweise ein gesuchter Gegenstand ausschließlich durch Peilung mit Hilfe von zwei Empfängern ausfindig gemacht werden. Die Einsetzbarkeit von Lagerhaltungssystemen auf Basis der Transpondertechnik ist ferner in der Praxis, insbesondere aufgrund der in der Lagerwirtschaft üblicherweise gewählten geringeren Reichweite der verwendeten Transpondertechnik, sehr eingeschränkt, weil die Systeme nur dann ordnungsgemäß funktionieren, wenn innerhalb des Empfangsbereiches der Empfangsantenne sich genau ein Transponder befindet. Sind innerhalb des Empfangsbereiches der Empfangsantenne zwei oder mehrere Transponder vorhanden, so können die Signale der angeregten Transponder nicht aufgelöst werden, bzw. es kann ein identifiziertes Signal nicht eindeutig zu einem der Transponder zugeordnet werden. Aus diesem Grund werden in der Praxis die Systeme hinsichtlich ihrer Reichweite so gering ausgelegt, dass sich lediglich ein aktivierter Transponder im Empfangsbereich der Empfängerantenne befindet. Zudem ist es für den Lageristen, z.B. Staplerfahrer, nicht erkennbar, welcher Transponder durch die zentrale Sendeeinrichtung angeregt wurde, so dass der Lagerist die gesuchte Komponente lediglich durch das Feststellen der Identität mittels technischer Hilfsmittel, wie z.B. Etiketten, Bar-Code-Scannern oder Transponder-Lesegeräten und dergleichen eindeutig erkennen kann.

Aufgabe der vorliegenden Erfindung ist daher, ein verbessertes, insbesondere effizienteres Lagersystem zur Verfügung zu stellen, das die wichtigsten Vorteile des chaotischen Lagerssystems (leichte Wiederauffindung, hohe Flexibilität, kapazitätsschonend) mit denen des klassischen Lagerssystems (hoher Ordnungsgrad, keine Standardisierung erforderlich) verbindet, ohne dass dabei deren Nachteile in Kauf genommen werden müssen.

Die Aufgabe wird gelöst durch ein elektronisch unterstütztes Lagerungssystem umfassend mindestens einen Zentralrechner, eine Sendestation und gegebenenfalls einen oder mehrere Lagerortsensoren mit definierter Position zur Erfassung von im Lager befindlichen Gegenständen, wobei die Gegenstände Kennungen oder die Kennungen speichernde Vorrichtungen aufweisen, und jeder Gegenstand zusätzlich mit einem Empfänger, der die von der Sendestation ausgesendeten Signale empfängt, und einem akustischen und/oder optischen Signalgeber, ausgestattet ist, wobei die Lagerortsensoren mit dem Zentralrechner in Verbindung stehen und derart positioniert sind, dass mindestens einer der Lagerortsensoren sich in der Nähe oder innerhalb der Reichweite des von dem gesuchten Gegenstand ausgesendeten Signals befindet.

Die von der bzw. den Sendestationen ausgesendeten Signale können sich durch unterschiedliche Frequenzen bzw. Wellenlängen auszeichnen. So können die Signale der Sendestationen vorzugsweise mittels Funksignalen übertragen werden. Möglich sind jedoch auch Schall, Ultraschall, Infraschall, sichtbares Licht und dergleichen. Wesentlich ist für das erfindungsgemäße Lagerungssystem, daß der akustische bzw. optische Signalgeber und die Sendestation(en) mit Vorrichtungen versehen sind, die unterschiedliche Signale aussenden, und hiervon mindestens ein Signal durch menschliche Sinnesorgane erfasst werden kann. Die auf den Gegenständen bzw. Komponenten angebrachten Empfänger sind mit eigener Energieversorung (z.B. Batterien) ausgestattet.

Ein weiterer Gegenstand der Erfindung ist ein Verfahren zum Auffinden von in einem Lager befindlichen Gegenständen, die mit Kennungen oder mit Kennungen speichernden Vorrichtungen, einem aktiven Empfänger und einem akustischen und/oder optischen Signalgeber ausgestattet sind, dadurch gekennzeichnet, dass eine den Gegenstand identifizierbare Kennung von einem Zentralrechner an eine Sendestation weitergeleitet wird, und das von der Sendestation ausgesendete Signal von einem am gesuchten Gegenstand angebrachten Empfänger empfangen wird, der dadurch ein akustisches und/oder optisches Signal aussendet, das direkt vom Menschen erfaßbar ist und von einem gegebenenfalls in der Nähe befindlichen Lagerortssensor erfaßt wird, der mit dem Zentralrechner in Verbindung steht.

Eine bevorzugte Ausführungsform des elektronisch unterstützten Lagerunssystems bzw. Verfahrens ist, dass die von einer Sendestation und dem Signalgeber der jeweiligen Gegenstände ausgesendeten Signale nebeneinander geortet bzw. identifiziert werden können. Dies kann durch unterschiedliche Signalquellen (z.B. Funk, Schall, Ultraschall, sichtbares Licht usw.) erreicht werden. Somit können neben der elektronischen Erfaßung eindeutige und für menschliche Sinnesorgane (Ohr und/oder Auge) leicht erfaßbare Lokalisierungs- und Identifizierungskennzeichen generiert werden, so dass eine Nachprüfung der Identität an dem jeweiligen Gegenstand selbst (z.B. durch Lesen des Etiketts) entfallen kann. Es hat sich in bestimmten Fällen jedoch als vorteilhaft erwiesen, wenn auf den einzelnen Gegenständen bzw. Gruppen von Gegenständen solche Kennungen bzw. die Kennungen speichernde Vorrichtungen angebracht sind, die sowohl elektronisch als auch optisch (durch sogenannte Bar-Code Scanner-Systeme, oder durch Bilderkennungssysteme) identifiziert und geortet werden können. Als besonders geeignet hat sich in vielen Fällen erwiesen, insbesondere bei unübersichtlicher bzw. verwinkelter Lagerarchitektur, wenn die Gegenstände zusätzlich akustisch identifizierbar sind.

Eine weitere mögliche Ausführungsform des erfindungsgemäßen Lagerungssystems bzw. Verfahrens besteht darin, dass insbesondere bei kleineren Lagerräumen bzw. -flächen auf die Anwesenheit eines Lagerortsensors vollständig verzichtet werden kann. In einem solchen Fall wird das vom gesuchten Gegenstand ausgesendete Signal direkt, z.B. vom zuständigen Lageristen, erfaßt.

Das erfindungsgemäße elektronisch unterstützte Lagerungssystem ist ferner zur Lagerung beliebiger Gegenstände, Gruppen von Gegenständen oder Komponenten in einem beliebigen Lagerraum oder auf einer beliebigen Lagerfläche in beliebiger Anzahl geeignet. Die Gegenstände können an beliebigen, freien Lagerplätzen abgestellt und mit Hilfe der erfindungsgemäßen computergesteuerten, elektronischen Ortungseinrichtung leicht wieder aufgefunden werden. Unter Gegenständen, Gruppen von Gegenständen bzw. Komponenten im Sinne der vorliegenden Erfindung sind Waren bzw. Gegenstände jeglicher Art zu verstehen, wie z.B. Rohstoffe, Ausgangsmaterialien für Vor- und Zwischenprodukte, chemische Produke, Möbel, Werk- oder Spielzeuge, Maschinen bzw. Fahrzeuge, Kunstobjekte, Büromaterial, Dokumente (z.B. gelagert in Archiven) oder Gepäckstücke.

Im einzelnen weist das erfindungsgemäße Lagerungssystem in seiner bevorzugten Ausführungsform folgende Komponenten bzw. Spezifikationen auf:
i. Je einen Empfänger mit je einer eigenen Adresse für je einen möglichen Lagerplatz, mindestens 30 Empfänger bzw. Lagerplätze, bevorzugt sind erfindungsgemäß mehr als 100 Empfänger bzw. Lagerplätze (Beispiel: für ein Lager mit 500 Lagerplätzen existieren mindestens 500 solcher Empfänger).
ii. Je einen Signalgeber zur Aussendung eines zu ortenden Signals für je einen möglichen Lagerplatz, mindestens 30 Signalgeber, bevozugt sind erfindungsgemäß mehr als 100 Signalgeber (Beispiel: für ein Lager mit 500 Lagerplätzen existieren mindestens 500 solcher Signalgeber).
iii. Lagerortsensor(en) in unterschiedlicher Anzahl (je nach Größe und Geometrie des Lagers), die in der Lage sind, Signale der Signalgeber (ii) zu empfangen und an eine Zentralsteuerung eine Empfangsbestätigung zu übermitteln. Alternativ kann jedoch, insbesondere bei Lagern kleineren Umfangs, auf einen Lagerortssensor vollständig verzichtet werden.
iv. Eine zentrale Steuersoftware, in der die Empfängeradressen (i) verwaltet werden und in der die zu lagernden Gegenstände den einzelnen Adressen zugeordneten werden. Die Software dient der Adressenverwaltung, der Ansteuerung der Hardware, der Einund Ausgabe von Suchaufträgen bzw. -ergebnissen, sowie der Anbindung an andere Softwaresysteme.
v. Einen oder mehrere Sendestationen (je nach erforderlichen Reichweiten), die durch die Steuersoftware (iv) angesteuert werden und eine gesuchte Adresse senden.

Empfänger (i) und Signalgeber (ii) sind gemäß einer weiteren bevorzugten Ausführungsform in einer Baugruppe ausgeführt und stellen somit eine diskrete Einheit dar.

### Verwendbare Signalmedien

Für die Kommunikation der oben genannten Sender (v) und Empfänger (i) eignen sich vorzugsweise Funkwellen mit Digitalsignalen. Die Frequenz und Leistungsstärke ist nach den lokalen Gegebenheiten festzulegen. Es sind jedoch auch Signale im Schall, Ultraschall, Infraschall, sichtbaren Lichtbereich (z.B. Lasersteuerung), bzw. auch Infrarotbereich geeignet.

Die Signalgeber (ii) arbeiten vorzugsweise mit anderen Signalmedien als die Sender (v) bzw. Empfänger (i). Im einfachsten Fall wird ein Tonsignal ausgesendet und der aktive Signalgeber durch den Lagerarbeiter geortet. Alternativ oder gleichzeitig kann ein optisches Signal ausgegeben werden. Zusätzlich kann ein Infrarotsignal an den Lagerortssensor (iii) ausgegeben werden.

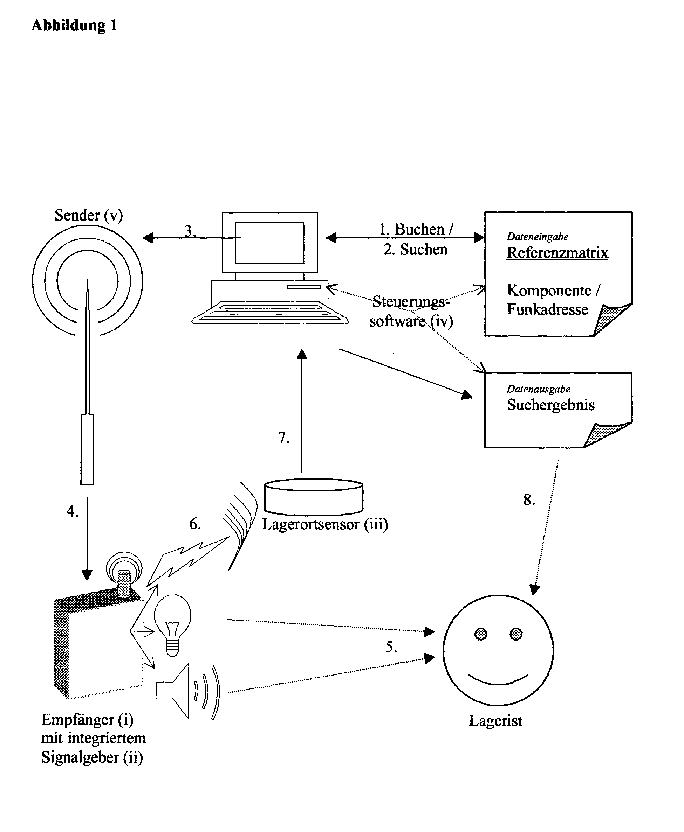

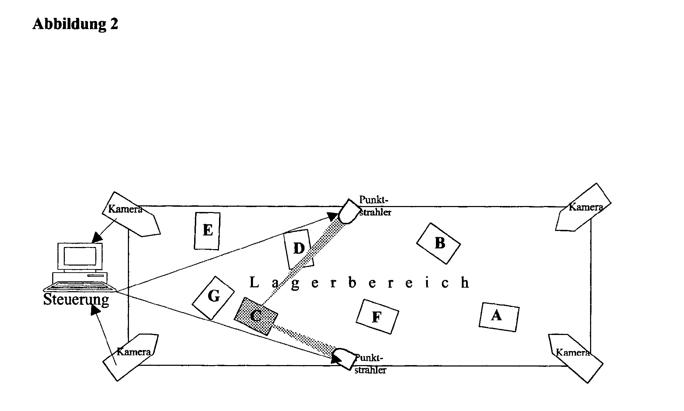

Zur näheren Erläuterung des Funktionsprinzips bzw. Aufbaus des erfindungsgemäßen elektronisch unterstützten Lagerungssystems wird auf Abbildungen 1 und 2 verwiesen.

### Erläuterung zur Abbildung 1:

Komponenten werden gebucht (1.) und mit einer Empfängeradresse verknüpft. Zum Suchen wird die Komponente ausgewählt (2.) und die entsprechende Adresse an den Sender gegeben (3.). Dieser Sender sendet den Adress-Code aus (4.). Der angesprochene Empfänger, der sich an dem gesuchten Gegenstand befindet, reagiert durch Aussendung eines akustischen und/oder optischen Signals (5.), und ermöglicht damit dem Lageristen die schnelle und präzise Ortung mit Ohr bzw. Auge. Zusätzlich sendet der Signalgeber ein Signal aus (6.), das durch einen oder mehrere Lagerortsensoren empfangen wird. Diese(r) melden (meldet) den Signalempfang an die Software (7.). Die Software teilt dem Benutzer mit, welcher der im Lager befindlichen Signalempfänger ein Signal aufgenommen hat (8.). Im zugehörigen Lagerbereich befindet sich die gesuchte Komponente, die dort wiederum mit Hilfe des akustischen und/oder optischen Signals (5.) für den Lageristen leicht zu orten und zu identifizieren ist.

### Erläuterung zur Abbildung 2:

Komponente C wurde durch Kameras aufgezeichnet, durch Bilderkennungssoftware identifiziert und durch rechnergesteuerte, mit Stellmotoren ausgestattete, bewegliche Punktstrahler auf die entsprechende Komponente ausgerichtet. Der Lagerist erkennt somit sofort, welches die gesuchte Komponente ist (A, B, D, E, F und G: weitere Komponenten im Lager). Der Lagerist kann sodann die gesuchte Komponente mit Hilfe des akustischen und/oder optischen Signals (5.) leicht orten und identifizieren.

Im folgenden wird der Aufbau bzw. die Installation des erfindungsgemäßen elektronisch unterstützten Lagerungssystem weiter beschrieben.
a. Einrichtung der Anlage:
   i. Die Steuerungssoftware wird auf einem geeigneten, handelsüblichen Computer installiert.
   ii. An den Computer werden mit einer geeigneten Schnittstelle ein oder mehrere Sender (z.B. Funksender) angeschlossen.
   iii. Gegebenenfalls werden an den Computer ein oder mehrere Lagerortssensor(en) angeschlossen.
   iv. Die Lagerortssensoren werden in geeigneter Weise im Lagerbereich verteilt installiert. Die Empfangsempfindlichkeit wird so eingestellt, dass einerseits ein Lagerortssensor nur Signale in seiner Nähe empfangen kann, andererseits der gesamte Lagerbereich durch Lagerortssensoren abgedeckt ist.
   v. Die geometrische Verteilung des Lagerortssensors bzw. der einzelnen Lagerortssensoren wird manuell in der Software gespeichert.
b. Einlagerung der Komponenten:
   i. Bei der Einlagerung der Komponenten (vorzugsweise bei der Anlieferung) wird je eine Komponente mit einem empfangsbereiten Signalempfänger bestückt.
   ii. Der individuelle Code des Signalempfängers wird in der Steuerungssoftware zusammen mit der Komponentenbezeichnung abgespeichert. Dies kann manuell oder z.B. mittels Barcode, Scanner oder dergleichen erfolgen, oder auch automatisch durch geeignete Ausnutzung der Empfänger/Sender-Eigenschaften der Signalempfänger, mittels geeigneter Vorrichtung.
   iii. Die Komponente wird (zusammen mit dem Signalempfänger) an beliebiger Stelle im Lager abgestellt.
c. Umlagerung:
   i. Die mit einem empfangsbereiten Signalempfänger bestückten und gebuchten Komponenten können im Lagerbereich beliebig verschoben (umgelagert) werden. Es gibt hierbei keinerlei Einschränkung und es bedarf hierzu keiner Planung oder Dokumentation.
d. Auslagerung:
   i. Die auszulagernde Komponente wird in der Steuerungssoftware bezeichnet.
   ii. Der Sender wird angesteuert und sendet den der Komponente zugeordneten Empfängercode aus.
   iii. Der an der Komponente angebrachte Empfänger erkennt diesen Code, schaltet sich ein und sendet seinerseits akustische, optische oder andere (z.B. IR) Antwortsignale aus.
   iv. Der im Lagerbereich installierte Lagerortssensor, in dessen Empfindlichkeitsbereich das Antwortsignal ausgesendet wird, meldet den Empfang des Antwortsignals an die Steuerungssoftware.
   v. Die Steuerungssoftware gibt in diesem Fall (iv.) die Information aus, in welchem Lagerbereich sich die gesuchte Komponente befindet.
   vi. Die genaue Ortung der gesuchten Komponente übernimmt der Lagerist, der die Komponente auslagert, indem er die Komponente herausnimmt, deren Empfänger ein akustisches und/oder optisches Signal aussendet, und sich hierdurch klar von anderen gelagerten Gegenstände unterscheidet.
   vii. Der jeweilige Empfänger wird anschließend von der auszulagernden Komponente abgenommen und in der Steuerungssoftware abgemeldet.

Alternativ umfaßt das erfindungsgemäße elektronisch unterstützte Lagerungssystem bzw. das Verfahren zum Auffinden von gelagerten Gegenständen die nicht-elektronische Markierung von Lagerkomponenten (z.B. durch geeignete Etiketten, bzw. durch ihre Art selbst), die eine Identifizierung und Ortung durch optisches Abtasten (Scanner, Bilderkennungssoftware) ermöglicht, und hierdurch die genaue Bezeichnung der Lagerposition erlaubt. Die optische Markierung der Lagerkomponente erfolgt in einem solchen Fall zum Beispiel durch Anstrahlen der jeweiligen Komponente mittels einer oder mehrerer elektronisch gesteuerter Leuchten (z.B. Punktstrahler), entsprechend der Lagerkoordinaten.

Eine solche Ausführungsform wird gemäß Abbildung 2 weiter erläutert.

Anhand der folgenden Ausführungsbeispiele wird die Erfindung näher erläutert:

### Beispiel 1

### Verwaltung und Wiederfindung von Lagerware

Rohstoffe auf Paletten oder in sonstiger Verpackung werden mit der Empfangseinheit bestückt, die Adresse der Empfangseinheit dem Rohstoff in einer Datenbank zugeordnet, und das Datenpaar gespeichert. Wird der Rohstoff benötigt (gesucht), so wird in der Datenbank die dem Rohstoff zugeordnete Adresse ermittelt und diese durch die beschriebene Sendeeinrichtung ausgesendet. Der am Rohstoff befindliche Empfänger sendet daraufhin ein akustisches und/oder optisches Signal aus, das dem Lageristen die richtige Erkennung des Rohstoffes ermöglicht.

### Beispiel 2

### Werkstückverfolgung

Bei vielen Fertigungsarten werden Werkstücke in geeigneten Behältern sukzessive zu verschiedenen Bearbeitungsstationen geleitet (z.B.: zuerst sägen, dann bohren, dann fräsen, dann schleifen, etc.). In der Routineproduktion werden die Arbeitsschritte und die zugehörige Bewegung der Werkstücke in der Regel mit Hilfe entsprechender Systeme unterstützt und in geplanter Weise abgewickelt.

Diese Vorgehensweise genügt jedoch bei Kleinlosen bzw. Einzelfertigung von z.B. Werkzeugen für die Metall- oder Kunststoffverarbeitung oft nicht der notwendigen Flexibilität (z.B. Spritzgussform für ein Kunststoffteil). Aus diesem Grund werden solche Werkstücke immer dann gesucht, wenn unerwartet Änderungen in der Spezifikation umgesetzt werden müssen, obwohl sich das Werkstück bereits im Fertigungsprozess befindet. (Beispiel.: In einem Werkzeug ist es erforderlich, eine Bohrung von 22,2 mm Durchmesser auf 18,5 mm zu ändern. Das Werkstück befindet sich bereits im Fertigungsprozess. Der Bearbeitungsschritt ,Bohren' ist der als nächstes anstehende Schritt; er ist im System noch nicht gebucht. Wurde er bereits durchgeführt? Wenn ,ja', dann muss das Teil vollständig neu erstellt werden. Wenn ,nein', dann kann die Änderung der Spezifikation noch berücksichtigt werden.) Anforderungen dieser Art sind in vielen Branchen üblich. Aus diesem Grund sind Lösungen zur schnellen (physischen) Lokalisation von Werkstücken gefragt.

Entweder das Werkstück selbst oder aber der zugehörige Transportbehälter kann mit dem beschriebenen Empfangsteil bestückt sein und erfindungsgemäß schnell und leicht wieder aufgefunden werden.

### Beispiel 3

### Werkzeugverfolgung

Analog Beispiel 2 können Werkzeuge und Hilfsmittel, die an unterschiedlichen Stellen zum Einsatz kommen oder nur sporadisch benötigt werden gemäß dem erfindungsgemäßen Lagerverwaltungssystem gekennzeichnet werden und somit leicht wieder aufgefunden werden (z. B. Abschmierwagen, Leeren zum Einrichten, Spezialgerät, Wehenschreiber, etc.).

### Beispiel 4

### Sicherheitsüberprüfung von Fluggepäck

Im Zuge der Sicherheitsüberprüfung von Passagierflügen wird stichprobenartig das geladene Gepäck dahingehend überprüft, ob es vollständig den Flugpassagieren zugeordnet werden kann. Hierzu werden die zu überprüfenden Flugzeuge nach der Beladung mit dem Passagiergepäck nochmals vollständig entladen. Die Passagiere steigen aus dem Flugzeug aus und identifizieren jeweils ihr persönliches Gepäckstück. Die identifizierten Gepäckstücke werden sodann wieder eingeladen. Ziel hierbei ist es festzustellen, ob ein oder mehrere Gepäckstücke nicht zu einem Passagier gehören. Solche Gepäckstücke werden sodann ausgesondert und separat auf ihren Inhalt hin geprüft. Eine Bestückung der Gepäckstücke mit der Empfangseinrichtung gemäß dem erfindungsgemäßen Lagerverwaltungssystem könnte den Ablauf der zusätzlichen Sicherheitsüberprüfung erheblich beschleunigen und auf diese Weise die eintretende Verzögerung verkürzen. Darüberhinaus kann auch auf das Ausladen des vollständigen Gepäcks aus dem Laderaum verzichtet werden, wenn die einzelnen Gepäckstücke im Sinne der vorliegenden Erfindung ausgestattet sind. Dadurch können bei den Fluggesellschaften im Falle des Nicht-Erscheinens von Passagieren, die jedoch Fluggepäck aufgegeben haben, erhebliche Kosten für die ansonsten erforderliche Aus- und Wiedereinladung des gesamten Fluggepäcks eingespart werden.

### Beispiel 5

### Fuhrpark (Mietfahrzeuge)

Bei der Verwaltung von Fuhrparks, wie zum Beispiel von Autovermietern, Behörden, Kommunen, KFZ-Neu- und Gebrauchtwagenhändlern, Speditionen, kann mit Hilfe des erfindungsgemäßen Lagerverwaltungssystems jedes Fahrzeug mit einem entsprechenden Empfänger bestückt werden und auf diese Art und Weise leicht identifiziert werden. Hierdurch könnte auf die heute oft übliche Zuordnung des Fahrzeugs zu einem festen Stellplatz verzichtet werden. Diese Zuordnungen sind in der Praxis sehr fehleranfällig (ein Fahrzeug wird bewegt und anschließend nicht auf dem ursprünglichen Platz abgestellt). Zudem wird bei der bisherigen Praxis der zur Verfügung stehende Platz nicht optimal genutzt. Das Empfangsteil des Lagerverwaltungssystems kann in diesem Fall dahingehend modifiziert werden, dass es bei Empfang der Eigenadresse zusätzlich bzw. alternativ die Hupe und/oder das Licht des jeweiligen Fahrzeugs aktiviert.

### Beispiel 6

### Spiele

In einer Vielzahl von existierenden oder neu zu entwickelnden Gesellschaftsspielen können mit Hilfe des erfindungsgemäßen Prinzips Spielfiguren und/oder Personen gekennzeichnet werden und je nach Spielsituation identifiziert bzw. ausgewählt werden.

### Beispiel 7

### Museen, Archive, Sammlungen

In vielen Präsentationen werden aufwendig verdrahtete Displays eingesetzt, um Besucher und Kunden per Tastendruck zu den verschiedenen Gegenständen Auskunft zu geben. Hier könnte mit Hilfe des erfindungsgemäßen Prinzips ein einfaches und sehr flexibles System eingerichtet werden, um die Gegenstände zu markieren.

### Beispiel 8

### Warenausgabe (IKEA-Anwendung)

In der Warenausgabe (z.B. Möbelhäuser) werden die abzuholenden Produkte konfektioniert und für den Abholer bereitgestellt. Hier könnten mit dem erfindungsgemäßen Lagerverwaltungssystem die einzelnen Aufträge gekennzeichnet werden und bei Bedarf leicht identifiziert und aufgefunden werden.

## Patentansprüche

1. Elektronisch unterstütztes Lagerungssystem umfassend mindestens einen Zentralrechner, eine Sendestation und gegebenenfalls einen oder mehrere Lagerortssensoren mit definierter Position zur Erfassung von im Lager befindlichen Gegenständen, wobei die Gegenstände Kennungen oder die Kennungen speichernde Vorrichtungen aufweisen, und jeder Gegenstand zusätzlich
a) mit einem Empfänger, der die von der Sendestation ausgesendeten Signale empfängt, und
b) einem akustischen und/oder optischen Signalgeber, ausgestattet ist,
wobei der bzw. die Lagerortssensor(en) mit dem Zentralrechner in Verbindung steht bzw. stehen und derart positioniert sind, dass mindestens einer der Lagerortssensoren sich in der Nähe oder innerhalb der Reichweite des von dem gesuchten Gegenstand ausgesendeten Signals befindet.

2. Elektronisch unterstütztes Lagerungssystem nach Anspruch 1, wobei die Sendestation mit einer Vorrichtung ausgestattet ist, welche Signale aussenden kann, die durch Frequenzen bzw. Wellenlängen von Funk, Schall, Ultraschall, Infraschall, sichtbarem Licht oder Infrarotlicht gekennzeichnet sind.

3. Elektronisch unterstütztes Lagerungssystem nach Anspruch 1, wobei der akustische bzw. optische Signalgeber zur Aussendung eines von der Sendestation unterschiedlichen Signals befähigt ist.

4. Elektronisch unterstütztes Lagerungssystem nach Anspruch 1 oder 3, wobei der Signalgeber mit einer Vorrichtung ausgestattet ist, die ein akustisches oder optisches Signal und ein Infrarotsignal an einen Lagerortsensor bzw. den Zentralrechner aussenden kann.

5. Elektronisch unterstütztes Lagerungssystem nach einem der vorangegangenen Ansprüche, wobei die auf den Gegenständen angebrachten Kennungen bzw. die Kennungen speichernden Vorrichtungen elektronisch und optisch identifiziert bzw. geortet werden können.

6. Elektronisch unterstütztes Lagerungssystem nach einem der Ansprüche 1 bis 4, wobei die auf den Gegenständen angebrachten Kennungen bzw. die Kennungen speichernden Vorrichtungen elektronisch, optisch und akustisch identifiziert bzw. geortet werden können.

7. Elektronisch unterstütztes Lagerungssystem nach einem der vorangegangenen Ansprüche, wobei mindestens 30 Gegenstände gelagert werden.

8. Verfahren zum Auffinden von in einem Lager befindlichen Gegenständen, die mit Kennungen oder mit Kennungen speichernden Vorrichtungen, einem Empfänger und einem akustischen und/oder optischen Signalgeber ausgestattet sind, **dadurch gekennzeichnet, daß** eine den Gegenstand identifizierbare Kennung von einem Zentralrechner an eine Sendestation weitergeleitet wird, und das von der Sendestation ausgesendete Signal von einem am gesuchten Gegenstand angebrachten Empfänger empfangen wird, der dadurch ein akustisches und/oder optisches Signal aussendet, das direkt und/oder gegebenenfalls von einem in der Nähe befindlichen Lagerortssensor erfaßt wird, der mit dem Zentralrechner in Verbindung steht.

9. Verfahren nach Anspruch 8, **dadurch gekennzeichnet, daß** das von der Sendestation und das von dem Signalgeber des jeweiligen Gegenstandes ausgesandte Signal nebeneinander identifizierbar sind.

10. Verfahren nach Anspruch 8 oder 9, **dadurch gekennzeichnet, daß** die auf den Gegenständen angebrachten Kennungen bzw. die Kennungen speichernden Vorrichtungen elektronisch und optisch identifiziert bzw. geortet werden.
